# EUROPEAN PATENT SPECIFICATION

(11) **EP 0 440 413 B1**
(45) Date of publication and mention of the grant of the patent: **02.05.1997**
(21) Application number: 91300652.4
(22) Date of filing: 29.01.1991
(51) Int. Cl.: G11B 27/10, G11B 27/11, G11B 20/12, G06F 3/06, G11B 20/18

(54) **Disk drive system and method for accessing a physical memory location therein**
Plattenantriebssystem und Methode zur Zugriffssteuerung einer physikalischen Speicherstelle darin
Système d'entraînement de disques et méthode pour y accéder une position mémoire physique

(30) Priority: 02.02.1990 US 474474
(43) Date of publication of application: 07.08.1991
(73) Proprietor: SEAGATE TECHNOLOGY INTERNATIONAL, Georgetown, Grand Cayman Island (KY)
(72) Inventor: Golden, Jeffrey Alan, Boulder Creek, California 95066 (US); Schuh, Karl David, Scotts Valley, California 95066-4136 (US)
(74) Representative: Sturt, Clifford Mark

(56) References cited:
- EP-A- 0 212 099
- EP-A- 0 223 611
- EP-A- 0 347 881
- WO-A-91/00594
- IBM TECHNICAL DISCLOSURE BULLETIN., vol.24, no.1B, June 1981, NEW YORK US pages 625 - 627 A.GANGULY ET AL 'INCREASED DIRECT-ACCESS STORAGE DEVICE YIELD THROUGH DEFECTIVE TRACK HANDLING IN HARDWARE'

## Description

The present invention relates to a method for accessing a physical memory location in a disk drive system, and to the disk drive system itself. More particularly, the present invention relates to a location translation arrangement, which provides an index table for enabling high speed translations of logical requests into target physical memory locations on a disk.

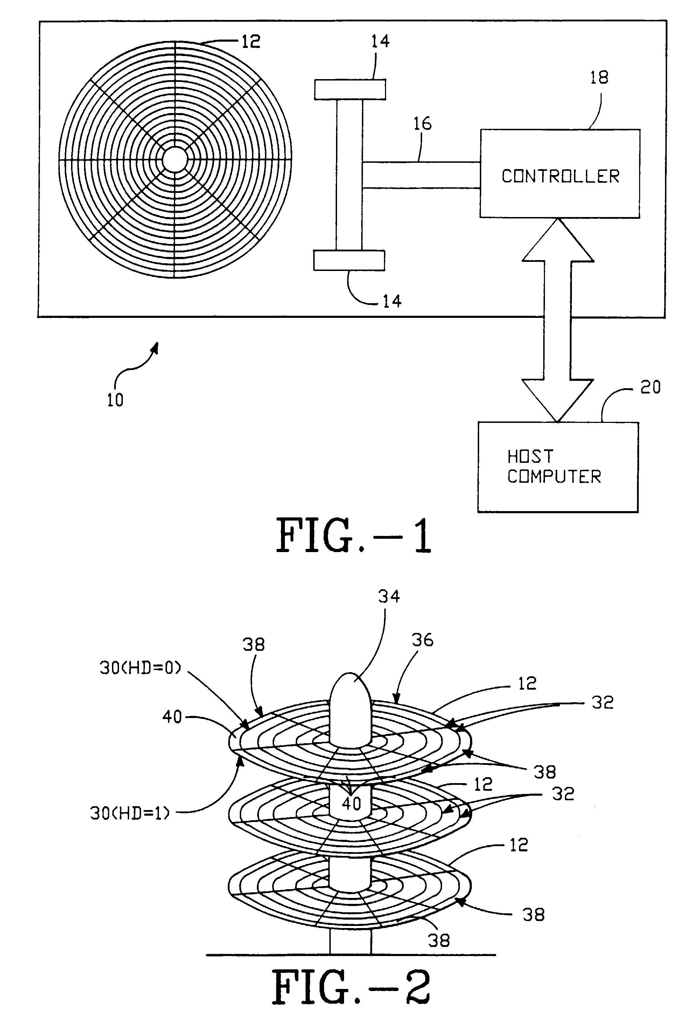

Computer systems rely on disk drive magnetic memory systems, amongst other devices, for data storage. Referring now to Figure 1, a block diagram of a standard disk drive system 10 is shown. The disk drive system 10 includes one or more magnetic storage disks 12, one or more magnetic read/write heads 14, and a seek mechanism 16 to move the heads 14 physically over the disks. A controller 18 manages information transfer between the storage disks and a host computer system 20 by controlling the seek mechanism 16.

Briefly describing the operation of the disk drive system 10, the host computer 20 provides logical instructions to the disk drive system to access or store information on individual physical memory locations on the disks. Information on the disks, however, is not stored in a logical format. A logical format would sequentially read or store data without considering the possibility of defective storage areas on the disk. Therefore, the controller 18 is required to translate the logical request from the host computer 20 into a corresponding physical target location on one of the disks. Once the translation is performed, the controller 18 manipulates the seek mechanism 16 to direct the heads 14 to the physical target location, whereupon the heads 14 will read or store information.

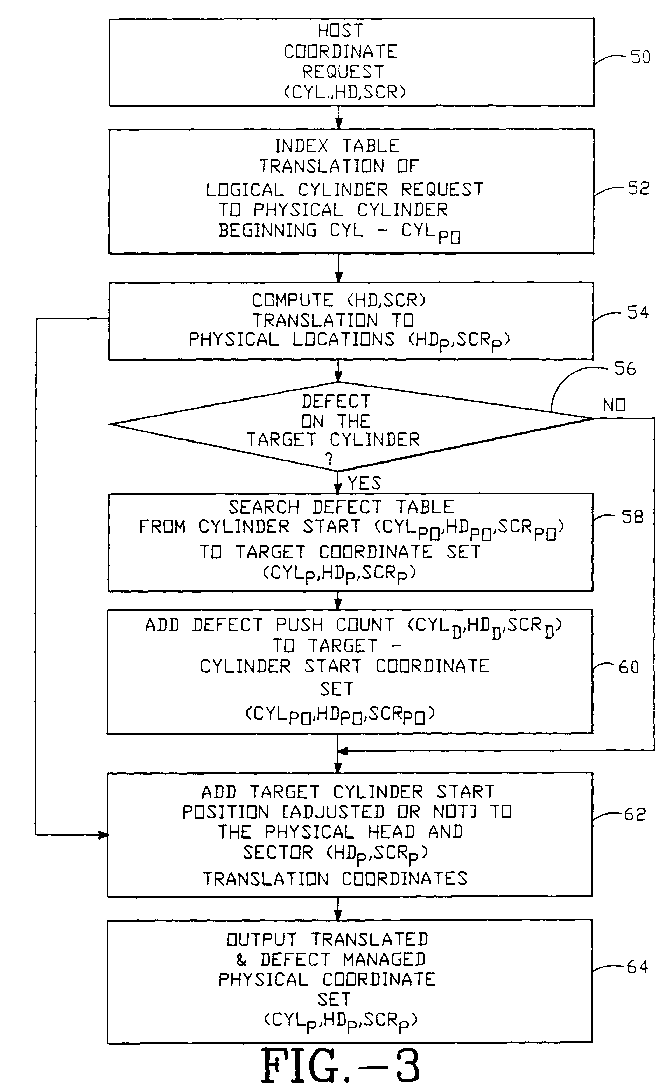

Referring now to Figure 2, an isolated perspective view of several magnetic disks 12 of the disk drive system 10 is shown. The purpose of illustrating the disks is to show how information is physically organised and stored on the disks, which is essential for an understanding of the present invention. Each side of a disk 12 is called a data storage surface 30, and there are two surfaces per disk (HD = 0 and HD = 1). Each surface 30 comprises a plurality of concentric circles called tracks 32. The outermost track is generally designated as the first logical track (track = 0) and the innermost track is designated as the last track (i.e. track = 999 in a 1,000 track disk drive system). The individual disks 12 are journalled about a single spindle 34 and are physically stacked one above the other. The combination of like track numbers on each of the surfaces 30 forms what is called a cylinder.

Each surface is also divided up into a certain number of pie shaped sectors 38. The plurality of areas created by the sectors 38 and the tracks 32 form individual storage locations called segments 40. Each segment is capable of storing 512 bytes of information. Each segment 40 is accessed by a three co-ordinate address corresponding to the cylinder number, the head number and the sector number.

In the early magnetic disk storage devices, the standard disks contained seventeen sectors per track. More recently, due to advances in disk drive technology, the same 512 bytes of information can be stored in a smaller physical location. The number of sectors per track has therefore increased, and the current state of the art is twenty six sectors per track. Using special data access techniques, the number of sectors per track can be expanded to as many as forty four.

A controller 18 is responsible for translating a logical request from the host computer 20 into the correct target physical segment 40 on the disk. Each logical request includes a logical cylinder, head and sector address, which must be translated into a target physical cylinder, head and sector locations.

The translation, however, is complicated by several factors. Host computers 20 still operate on the old seventeen sector standard and, hence, their logical requests are in seventeen sector format. By contrast, modern disk drives contain a varying number of sectors per track up to twenty six sectors per track. Accordingly, as will be described in the example below, a mathematical translation from a logical seventeen sector format to a physical twenty six sector format is required.

A second factor which complicates the translation is that the host computer 20 considers the disk drive to be a defect free memory block. In practice, however, defective segments are intermittently spaced throughout the physical disk media. A defect management method is therefore required.

To describe the operation of the prior art two step translation and defect management arrangement, an example is provided. A two step process is required for a complete logical to physical translation. The two steps include:-
(1) Calculating the logical to physical location translation using well known mathematical translation algorithms.
(2) Adjusting the target physical translation to compensate for known physical defects which exist in the disks of the disk drive.

Consider a three head, twenty six sector per track, drive controlled by a host computer using a four head, seventeen sector per track, format. The host computer 20 sends a request to the controller 18 for a logical address comprising a logical cylinder number (1), a logical head number (3), and a logical sector number (16). The first step in the mathematical translation is to convert the logical request into an intermediate sector number, which in this instance is 135. This number is derived, on the basis of the host computer format, by multiplying the requested cylinder number (1) times the number of heads per cylinder (4) times the number of sectors per track (17), and adding the head request number (3) times the number of sectors per track (17) and also the sector request number (16), as follows:-$\text{(1 x 4 x 17) + (3 x 17) + 16 = 135}$ The previous calculation is much like the calculation to convert a base seventeen number into a base ten number. Next, the base ten number must be translated into a base twenty six location.

The intermediate number, 135, is translated into a target physical segment in the twenty six sector disk drive system in the following manner. In the three head and twenty six sectors per track disk drive configuration, there are seventy eight segments per cylinder. With an intermediate segment number of 135, one cylinder is completely used up with fifty seven segments remaining (135 - 78 = 57). Two complete tracks can be completely inserted into the remainder (2 x 26 = 52), with a remainder of five sectors. Accordingly, the target translation results in a physical segment designated by the numbers:
cylinder = 1
head = 2
and
sector = 5.

In the second step, the target physical segment location is adjusted to compensate for physical defects, which occur on the disk prior to the above physical target segment location. Before discussing two common techniques for compensating for defects, it is first necessary briefly to described how physical defects are detected on the disk surface. The disk drive manufacturer writes information on every segment 40 on the disk and then reads back that information. Segments from which information cannot be read are marked as defective. The locations of all the defects are recorded and mapped out of the physical disk so that they are not accessed during actual disk drive operations.

Two popular methods of mapping out defects are described below. In the first method, a physical track is first marked out on the disk. The track must be large enough to accommodate the total number of segments per track (i.e. twenty six) plus the allocation of several spares. The sectors are then mapped out consecutively, starting with 1 and ascending in order to the last sector number 26 within the track. Whenever a physical defect occurs in the track, it is simply re-mapped into a spare area at the end of the track.

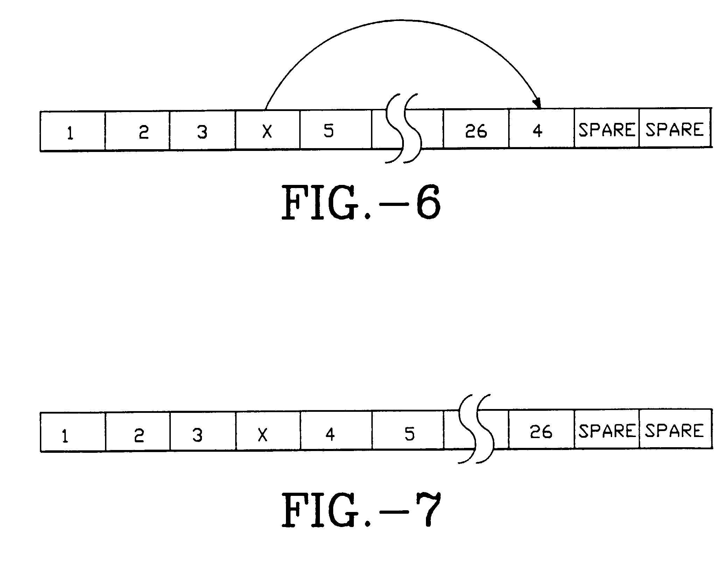

Referring to the illustrative table of Figure 6 for describing the first defect management method, a twenty six sector track is shown. The segment numbers ascend in linear order from one to three until segment number four is encountered. In the fourth segment, an "X" appears signifying that a physical defect is present. In the mapping method described above, the fourth segment is simply re-mapped, as illustrated by the arrow, into a spare segment at the end of the track.

In a second defect management method according to the prior art, the solution for accommodating physical defects that occur in a track is simply to skip them and to increment the remaining segments accordingly. Each time a defect occurs, in consequence, the last segment on the map is pushed into a next adjacent spare segment.

Referring now to the illustrative table of Figure 7, for explaining the second prior art defect management method, a simplified twenty six sector track is shown. The defect at segment four, identified by an "X", is pushed into the next segment. As a result, the subsequent segment numbers five to twenty six are incremented so that each sector as a logical address is in a physical location, which has been incremented by a push count equal to the accumulated number of bad sectors occurring before the requested logical sector.

A number of problems are associated with the translation and defect management methods of the prior art as described above. Foremost, the time required for the mathematical translation is excessive. It is a slow and tedious process for the disk drive controller to access the aforementioned absolute physical location.
The checks required to keep track of the defects also slow down the computation significantly. Approximately two to five milli-seconds are required for each translation. The accumulated effect of these translations seriously impedes information transfer time between the disk drive system 10 and the host computer 20.

Another problem with the prior art is that it fails to make efficient use of the physical space on the disk drive media. Even with twenty six sectors per track, a large percentage of the magnetic storage surface remains unused. The sectors contained in the innermost tracks are physically shorter than their counterparts situated near the outer circumference of the disk. The information storage density per segment in the inner tracks is therefore relatively high, and is an efficient use of space. In contrast, the density at the outer segments is relatively low, and is an inefficient use of space. As a result, a substantial percentage of the physical storage medium located near the outer circumference of the disk is unused. Furthermore, a proportion of the spare segments remain unused, which is wasteful.

One prior art defect management system is shown in IBM Technical Disclosure Bulletin, Vol. 24, No. 1B, June 1981, at pages 625 to 627. This describes a system in which defective tracks in a disk drive system are avoided by using an index table to convert logical cylinder and head addresses to physical cylinder and head numbers. However, this does not describe any way of avoiding defective segments and does not allow more efficient use of space on the disk. Another technique is disclosed in European Patent Publication No. 0223611, where a logical block address is translated to a logical cylinder head and sector number, which is then adjusted in response to a defect list to find physical cylinder, head and sector numbers. However, such a technique does not allow the available space on the disk to be used more efficiently.

It is an object of the present invention to provide a technique for accessing a physical memory location in a disk drive system, which avoids or at least reduces the problems indicated above.

According to one aspect of the present invention, there is provided a method for accessing a physical memory location in a disk drive system having at least one magnetic storage disk having a plurality of the physical memory locations, and at least one magnetic head for accessing the physical memory locations, wherein each physical memory location is designated by a cylinder number, a head number and a sector number, the method comprising the steps of receiving a request for access to a physical memory location, the request comprising a logical cylinder address, a logical head address and a logical sector address, translating the logical cylinder address, the logical head address and the logical sector address into a physical cylinder number, a physical head number and a physical sector number, and seeking said at least one magnetic head to the physical memory location on said at least one disk designated by the physical cylinder number, the physical head number and the physical sector number, characterised in that the step of translating comprises:
obtaining the physical cylinder number and physical cylinder start location by referring to an index table, in which logical cylinder addresses correspond with physical cylinder numbers and physical cylinder start locations for physical cylinders arbitrarily located on said at least one magnetic storage disk and translating mathematically the logical head address and the logical sector address.

According to another aspect of the present invention, there is provided a disk drive system having a controller, at least one magnetic storage disk having a plurality of physical memory locations, and at least one magnetic head for accessing the physical memory locations, wherein each physical memory location is designated by a cylinder number, a head number and a sector number, the controller comprising means for receiving a request for access to a physical memory location, in the form of a logical cylinder address, a logical head address and a logical sector address, and means for translating the logical cylinder address, the logical head address and the logical sector address into a physical cylinder number, a physical head number and a physical sector number, and the controller being arranged to move said at least one magnetic head to the physical memory location on said at least one magnetic storage disk designated by the physical cylinder number, the physical head number and the physical sector number, characterised in that the controller further comprises an index table in which logical cylinder addresses correspond with physical cylinder numbers and physical cylinder start locations for physical cylinders arbitrarily located on said at least one magnetic disk, means for referring to the index table in response to the request for access for obtaining the physical cylinder number and physical cylinder start location, and means for translating mathematically the logical head address and the logical sector address.

By means of the present invention, it is possible significantly to reduce access time to any storage location on a magnetic storage disk.

Furthermore, the invention permits an arbitrary arrangement of target physical cylinders in the disk drive system, which is advantageous in terms of use of space.

For example, the percentage of physical disk space that is actually used for information storage may be significantly increased by dividing the physical area of the disks into several zones, and varying the number of sectors per track in each zone.

Advantageously, the index table may be used for high speed translations of logical cylinder requests into physical target cylinders of the at least one magnetic storage disk. Preferably, the index table also provides a pointer into a defect table if there is a defect present at the target physical disk location. In this case, the defect table may provide an offset value to push the target physical location into a new, defect free physical location to allow direct access of this new location.

The invention will be described further, by way of example, with reference to the accompanying drawings, in which:
Figure 1 is a block diagram of a standard disk drive system according to the prior art;
Figure 2 is an isolated perspective view of several of the disk of the disk drive system of Figure 1;
Figure 3 is a flow chart representing the steps in a method according to the present invention;
Figure 4 is an index table employed in the present invention for high speed logical to physical target cylinder translations;
Figure 5 is a defect table employed in the present invention for managing defect adjustment when a defect exists in the indexed physical target cylinder; and
Figures 6 and 7 illustrate prior art approaches to defect management.

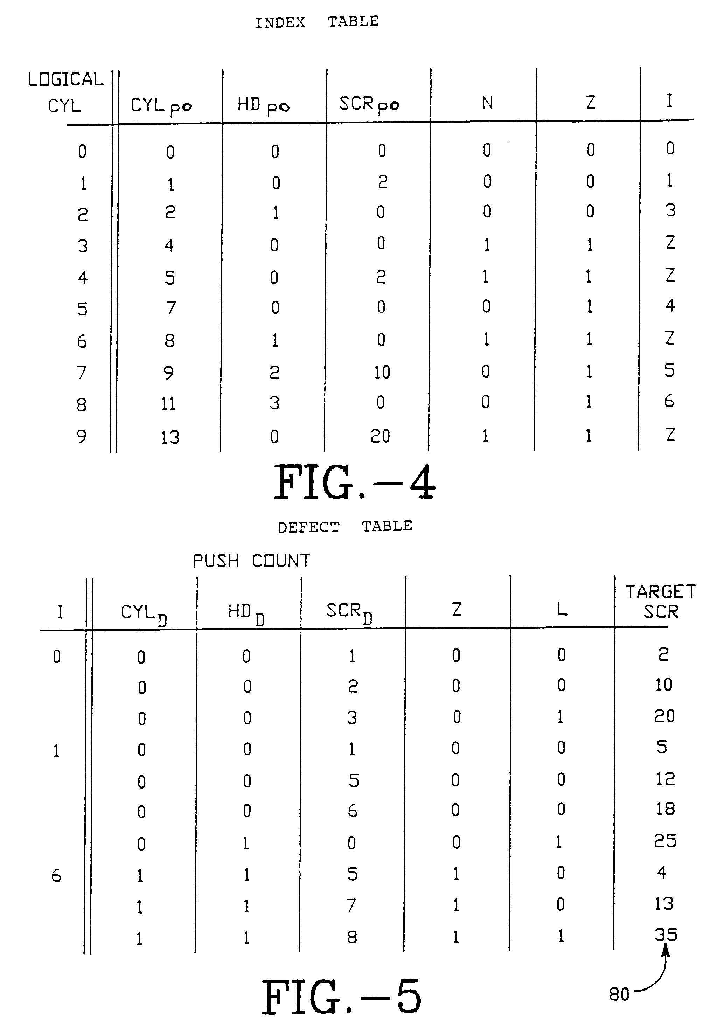

The present invention, which may be employed in a disk drive system substantially as shown in Figures 1 and 2 and which is represented in the flow chart in Figure 3, relates to a disk drive memory location translation and defect management arrangement, wherein the disk drive controller uses an index table to translate a logical cylinder address in a request received from a host computer (step 50) into a corresponding, arbitrarily designated, beginning of a physical target cylinder location in the disk drive system (step 52). Once the physical cylinder is located, physical head and sector locations are determined with a quick, relatively simple mathematical translation (step 54).

If a defect is present in the indexed physical target cylinder, the index table provides a defect flag (step 56) to inform the controller of the existence of the defect, and a pointer which points to a predetermined entry in a defect table (step 58). The selected entry in the defect table provides a defect offset value for the physical location in question. The offset value is added to the start co-ordinates of the physical target cylinder location, i.e. to designated cylinder, head and sector co-ordinates, (step 60) to push these co-ordinates into a defect free physical location. The adjusted or unadjusted start co-ordinates (depending on whether or not a defect existed in the designated cylinder) are added to the computed translation providing the physical head and sector locations (step 62) to provide a translated and defect management adjusted physical co-ordinate set for output (step 64).

The net result of the present invention is that it significantly reduces information access time, from its arbitrary arrangement of individual physical cylinders on a disk, and significantly increases the percentage of physical space used for information storage.

Referring now to Figure 4, an index table used for high speed logical to physical target cylinder translations according to the present invention is shown. This table is stored in a memory associated with a servo-processor within the disk drive controller 18, and is accessed for each seek to a memory location ordered by the host computer 20. The logical cylinder co-ordinate requested by the host computer 20 is used to designate an address for accessing each entry in the index table. The logical head and sector co-ordinates are used later in a mathematical equation to refine the target cylinder start co-ordinates provided by the index table.

The first entry is labelled as logical cylinder 0, and the last entry corresponds to the last logical cylinder accessible in the disk drive. For the purposes of simplification, the index table of Figure 4 contains only ten logical cylinder entries numbered 0 to 9. It should be noted, however, that the index table can be adapted to operate with any disk drive system.

Each table entry includes four bytes of data to store the aforementioned physical information. The four bytes store the information as follows:-
- Byte 0 =: [HD, HD, HD, HD, N, C, C, C]
- Byte 1 =: [C, C, C, C, C, C, C, C]
- Byte 2 =: [I, SR, SR, SR, SR, SR, SR, SR]
- Byte 3 =: [I, I, I/Z, I/Z, I/Z, I/Z, I/Z, I/Z]
wherein
- HDpo (HD) =: the physical head location
- N (N) =: a defect flag bit
- CYLpo(C) =: the physical cylinder location
- SCRpo(SR) =: the physical sector location
- I =: index into defect table, or
- Z =: zone (number of sectors/cylinder)

The co-ordinates given for each table entry for physical cylinder location (C), physical head location (HD) and physical sector location (SR) provide a pointer to a designated start for the target physical cylinder corresponding to the requested logical cylinder. Because the start of a target physical cylinder may be arbitrarily designated anywhere in the disk drive system, the translation method of the present invention offers disk space access and structuring freedom which was not previously realisable.

The "N" bit is a defect flag. If no defects are present in the target physical cylinder, the defect flag is set to N = 1. With no defects in the cylinder, byte 3 contains zone information. Different values of "Z" inform the controller 18 of the number of sectors per cylinder, which may vary from zone to zone. A zone consists of one or more cylinders, which have the same number of sectors per cylinder. The zone content is important in mathematically translating the logical head and sector co-ordinates, based on seventeen sectors per track, into the physical head and sector co-ordinates, which under the present invention have a variable sector basis depending upon the zone. The present invention translates the head and sector co-ordinates in the same manner as was previously described concerning the prior art. To summarise, the co-ordinates based on seventeen sectors per track are translated into a base ten intermediate number, which is subsequently translated into a co-ordinate set based on the actual sectors per track contained in the particular zone of interest.

Note that the index table only provides the physical cylinder's start location corresponding to the host computer's requested logical co-ordinate set. The remaining two requested logical co-ordinates are translated mathematically as described above. If no defects exist in the designated physical cylinder, the mathematically translated co-ordinates are added to the physical cylinder's start co-ordinates to provide a complete set of translated co-ordinates defining the target physical location. However, if the defect bit is set to N = 0, indicating that a defect exists in the physical cylinder, byte 3 contains a pointer "I" into the defect table 80 of Figure 5.

The indexing arrangement, as described above, provides several advantages over the prior art. The index table look up and calculation takes less than 200 micro-seconds, and represents a significant time reduction in the prior translation and pre-seek arrangement described before. Current disk drive manufacturing technology has reduced the number of defects present on a typical disk to an average of one defect per four tracks. Accordingly, the index table as described above is used approximately 75% of the time, which means that three out of four of the logical to physical translations occur in less than 200 micro-seconds. The reduction in time is due mainly to the elimination of the complicated mathematical computations, required for translating the logical cylinder number into a physical cylinder location, through the use of the index table.

Referring now to Figure 5, the defect table is shown. The defect table 80 is accessed by the index table of Figure 4 if a defect exists in the indexed physical target cylinder. Each table entry of the defect table 80 includes four bytes of data for storing the following information:
- byte 0 =: [t7, t6, t5, t4, t3, t2, t1, t0]
- byte 1 =: [10, z6, z5, z4, z3, z2, z1, z0]
- byte 2 =: [h3, h2, h1, h0, c3, c1, c0, R]
- byte 3 =: [s7, s6, s5, s4, s3, s2, s1, sO]
wherein
- TARGET SCR (t) =: target physical sector on cylinder,
- CYL_{D} (c) =: cylinder push count,
- HD_{D} (h) =: head push count,
- SCR_{D} (s) =: sector push count,
- L (l) =: last defect on this cylinder,
- Z (z) =: zone (number of sector/cylinder),
and
- R: = reserved bit.

The value "I" from the index table provides the address information for each entry in the defect table 80. Within the defect table 80, the cylinder push count (CYL_{D}), head push count (HD_{D}) and sector push count (SCR_{D}) represent the push or offset value for a single target physical cylinder entry in the defect table, and not the accumulated number of defects for the entire drive. The value "L" in the defect table is used to delineate the last defect on the target physical cylinder. The zone value "Z" provides the number of sectors per cylinder.

To implement the disk drive translation and defect management method of the present invention, it is first necessary to construct the index and defect tables. The index and defect tables are constructed at the disk drive factory. The tables are then stored in micro-code, and are loaded into the disk drive system when booted up.

Each defect is discovered by filling the disks with data and then attempting to read the data stored in each segment. A listing or map is constructed that lists every possible co-ordinate set or cylinder number, head number and sector, and designates which addresses are defective. This listing is called a sector map.

The sector map is used to construct both the index table and the defect table. Disk drive designers use the sector map to determine the best layout of start and stop locations for each cylinder. Cylinders may be designated, such that, large blocks of defects may fall between cylinders. Consequently, these areas would never be accessed by the disk drive. Each designated physical cylinder start position is tabulated with the host's logical cylinder designation to create the index table, for example as shown in Figure 4.

The disk drive designers complete the index table by adding the defect flag, the zone data, and the defect table pointer address, if necessary.

The defect table is constructed by listing the number of defects per physical cylinder. Defects are accummulated by sequentially adding them as the cylinder is searched. As the defects are added, a push count is generated and maintained. The push count is an address offset, usually designated by a three co-ordinate set, namely: cylinder push count, head push count, and sector push count. This push count is added to the requested address to move, or push, the address to a new, non-defective sector. The defect pointer designates the first defect in the defect table corresponding to the particular cylinder in question. A series of defects is entered into the table as a single entry with the push count incremented by the number of errors in the series. The table is then searched until either the target sector is reached in the search or the last defect on this cylinder flag (L) is detected. In either case, the push count up to that point is added to the physical cylinder start position providing an adjusted start position which when added to the calculated target head and sector co-ordinates will result in an error free address.

Each physical cylinder has a corresponding address or set of addresses in the defect table, unless no errors exist in that cylinder. A defect table search adds approximately 50 micro-seconds per defect to a translation time. Typically, therefore, a worst case for the translation time for searching a physical cylinder with six discrete defects is less than 500 micro-seconds.

The disk drive translation and defect management method of the present invention provides numerous advantages for information storage in disk drive systems. The main advantage is a significant reduction of translation time. With the target location stored in the index table, the mathematical steps required to calculate the target physical cylinder are no longer necessary. Furthermore, no matter how many physical defects occur before a target physical location, it is not necessary for the controller 18 to perform any defect management computations because they have been pre-computed in advance. Accordingly, the present invention reduces computation time to approximately 10% of that required in prior art methods.

Another significant advantage of the translation and defect management arrangement of the present invention is its flexibility in mapping the disk drive. The index table can be constructed so that any logical cylinder number can be translated into an arbitrary physical location designated anywhere on the disks of the drive system. For instance, it is advantageous to place the physical cylinder location corresponding to the logical cylinder 000 in the middle of the disk. This is accomplished by constructing the index table so that when the logical cylinder 000 is called, the index table directs the controller 18 to the physical location in the middle of the disk. The advantage of mapping the logical cylinder 000 into the centre of the disk is that it reduces the average head access time in half.

Yet another advantage of the present disk drive translation and defect management arrangement is the ability for an end user to modify the disk drive into different configurations. By adjusting the number of entries in the index table, the number of physical cylinders and heads in a disk drive can be altered. For example, a 700 cylinder two head disk drive can be altered into a 500 cylinder three head disk drive. This is accomplished by reducing the number of entries in the index table from 700 to 500, and adjusting the physical head information (HD) stored in byte 0 of the index table to reflect a change from two to three heads.

Yet another advantage of the disk drive translation and defect management arrangement of the present invention is its ability to handle efficiently a large number of defects which may occur in a disk drive system. The defect management arrangement of the present invention enables grouping of the defects together so that they appear as a single defect during translation. For example, if five discrete defects occur in close proximity to one another, the group of defects can be mapped to occur between the end of one physical cylinder and the beginning of the next physical cylinder. In this manner, the group of discrete defects are essentially spanned or mapped out of the index table. The defects are thus transparent to the controller 18.

Yet another advantage is that the arrangement of the present invention can use disk drives and space more efficiently. The zone number "Z" for each entry can be arbitrarily set to vary the number of sectors per cylinder from zone to zone. For example, the inner zone may be set to thirty sectors per cylinder, the middle zone may be set to thirty six sectors, and the outer zone may be set to forty four sectors. Such an arrangement provides an efficient use of the physical media space of the disk drive.

## Claims

1. A method for accessing a physical memory location in a disk drive system having at least one magnetic storage disk (12) having a plurality of the physical memory locations (40), and at least one magnetic head (14) for accessing the physical memory locations, wherein each physical memory location is designated by a cylinder number, a head number and a sector number, the method comprising the steps of receiving a request for access to a physical memory location, the request comprising a logical cylinder address, a logical head address and a logical sector address, translating the logical cylinder address, the logical head address and the logical sector address into a physical cylinder number, a physical head number and a physical sector number, and seeking said at least one magnetic head to the physical memory location on said at least one disk designated by the physical cylinder number, the physical head number and the physical sector number, characterised in that the step of translating comprises:
obtaining the physical cylinder number and physical cylinder start location by referring to an index table, in which logical cylinder addresses correspond with physical cylinder numbers and physical cylinder start locations for physical cylinders arbitrarily located on said at least one magnetic storage disk and translating mathematically the logical head address and the logical sector address.

2. A method according to claim 1 characterised in that the step of translating further comprises referring to a defect table for generating the physical head number and the physical sector number from the logical head address and the logical sector address, whereby to compensate for physical defects on said at least one magnetic storage disk.

3. A method according to claim 2 characterised in that the defect table contains a defect count representing the number of physical defects present in each physical cylinder on said at least one magnetic storage disk, and in that the step of generating comprises computing an initial physical head number and an initial physical sector number from the logical head address and the logical sector address and adjusting the physical head number and the physical sector number according to the defect count obtained from the defect table.

4. A method according to claim 2 or 3 characterised in that the step of referring to the defect table is initiated by a pointer in the index table.

5. A method according to any preceding claim characterised in that the system has a controller (18) and the request comes from a host computer (20), the method further comprising storing the index table in the controller and seeking said magnetic head to the physical cylinder, head and sector number to facilitate information transfer between said physical memory location and said host computer.

6. A disk drive system having a controller (18), at least one magnetic storage disk (12) having a plurality of physical memory locations (40), and at least one magnetic head (14) for accessing the physical memory locations, wherein each physical memory location is designated by a cylinder number, a head number and a sector number, the controller comprising means for receiving a request for access to a physical memory location, in the form of a logical cylinder address, a logical head address and a logical sector address, and means for translating the logical cylinder address, the logical head address and the logical sector address into a physical cylinder number, a physical head number and a physical sector number, and the controller being arranged to move said at least one magnetic head to the physical memory location on said at least one magnetic storage disk designated by the physical cylinder number, the physical head number and the physical sector number, characterised in that the controller further comprises an index table in which logical cylinder addresses correspond with physical cylinder numbers and physical cylinder start locations for physical cylinders arbitrarily located on said at least one magnetic disk, means for referring to the index table in response to the request for access for obtaining the physical cylinder number and physical cylinder start location, and means for translating mathematically the logical head address and the logical sector address.

7. A disk drive system according to claim 6 characterised in that the controller further comprises a defect table, and means for referring to the defect table for generating the physical head number and the physical sector number from the logical head address and the logical sector address.

8. A disk drive system according to claim 7 characterised in that the defect table contains a defect count representing the number of physical defects present in each physical cylinder on said at least one magnetic storage disk.

9. A disk drive system according to claim 7 or 8 characterised in that the index table contains pointers to the defect table associated with the physical cylinder numbers for physical cylinders in which defects are present.

## Patentansprüche

1. Verfahren zum Zugriff auf einen physikalischen Speicherplatz in einem Plattenlaufwerk-System mit zumindest einer magnetischen Speicherplatte (12), die eine Vielzahl von physikalischen Speicherplätzen (40) aufweist, und mit zumindest einem Magnetkopf (14) für den Zugriff auf die physikalischen Speicherplätze, wobei jeder physikalische Speicherplatz durch eine Zylindernummer, eine Kopfnummer und eine Sektornummer bezeichnet ist und das Verfahren die Schritte des Empfanges einer Anforderung für den Zugriff auf einen physikalischen Speicherplatz, wobei die Anforderung eine logische Zyllinderadresse, eine logische Kopfadresse und eine logische Sektoradresse umfaßt, der Übersetzung der logischen Zylinderadresse, der logischen Kopfadresse und der logischen Sektoradresse in eine physikalische Zylindernummer, eine physikalische Kopfnummer und eine physikalische Sektornummer, und der Suchbewegung des zumindest einen Magnetkopfes auf den physikalischen Speicherplatz auf der zumindest einen Platte umfaßt, der durch die physikalische Zylindernummer, die physikalische Kopfnummer und die physikalische Sektornummer bezeichnet ist,
dadurch gekennzeichnet, daß der Schritt der Übersetzung:
die Gewinnung der phyikalischen Zylindernummer und des physikalischen Zylinder-Anfangsspeicherplatzes durch Bezugnahme auf eine Indextabelle, in der logische Zylinderadressen physikalischen Zylindernummern und physikalischen Zylinder-Anfangsspeicherplätzen für physikalische Zylinder entsprechen, die willkürlich auf der zumindest einen magnetischen Speicherplatte angeordnet sind und die mathematische Übersetzung der logischen Kopfadresse und der logischen Sektoradresse umfaßt.

2. Verfahren nach Anspruch 1,
dadurch gekennzeichnet, daß der Schritt der Übersetzung weiterhin die Bezugnahme auf eine Fehlertabelle zur Erzeugung der physikalischen Kopfnummer und der physikalischen Sektornummer aus der logischen Kopfadresse und der logischen Sektoradresse umfaßt, wodurch physikalische Fehler auf der zumindest einen magnetischen Speicherplatte kompensiert werden.

3. Verfahren nach Anspruch 2,
dadurch gekennzeichnet, daß die Fehlertabelle eine Fehlerzählung enthält, die die Anzahl von physikalischen Fehlern darstellt, die in jedem physikalischen Zylinder auf der zumindest einen magnetischen Speicherplatte vorhanden sind, und daß der Schritt der Erzeugung der Berechnung einer anfänglichen physikalischen Kopfnummer und einer anfänglichen physikalischen Sektornummer aus der logischen Kopfadresse und der logischen Sektoradresse und den Abgleich der physikalischen Kopfnummer und der physikalischen Sektornummer gemäß der Fehlerzählung umfaßt, die aus der Fehlertabelle gewonnen wird.

4. Verfahren nach Anspruch 2 oder 3,
dadurch gekennzeichnet, daß der Schritt der Bezugnahme auf die Fehlertabelle durch einen Zeiger in der Indextabelle eingeleitet wird.

5. Verfahren nach einem der vorhergehenden Ansprüche,
dadurch gekennzeichnet, daß das System ein Steuergerät (18) aufweist, und daß die Anforderung von einem Hauptcomputer (20) kommt, wobei das Verfahren weiterhin die Speicherung der Indextabelle in dem Steuergerät und die Suchbewegung des magnetischen Kopfes auf die physikalische Zylinder-, Kopf- und Sektornummer umfaßt, um eine Informationsübertragung zwischen dem physikalischen Speicherplatz und dem Hauptcomputer zu erleichtern.

6. Plattenlaufwerk-System mit einem Steuergerät (18), mit zumindest einer magnetischen Speicherplatte (129 mit einer Vielzahl von physikalischen Speicherplätzen (40) und mit zumindest einem Magnetkopf (14) für einen Zugriff auf die physikalischen Speicherplätze, wobei jeder physikalische Speicherplatz durch eine Zylindernummer, eine Kopfnummer und eine Sektornummer bezeichnet ist und das Steuergerät Einrichtungen zum Empfang einer Anforderung für einen Zugriff auf einen physikalischen Speicherplatz in Form einer logischen Zylinderadresse, einer logischen Kopfadresse und einer logischen Sektoradresse und Einrichtungen zur Übersetzung der logischen Zylinderadresse, der logischen Kopfadresse und der logischen Sektoradresse in eine physikalische Zylindernummer, eine physikalische Kopfnummer und eine physikalische Sektornummer umfaßt, und wobei das Steuergerät so angeordnet ist, daß es den zumindest einen Magnetkopf auf den physikalischen Speicherplatz auf der zumindest einen magnetischen Speicherplatte bewegt, der durch die physikalische Zylindernummer, die physikalische Kopfnummer und die physikalische Sektornummer bezeichnet ist,
dadurch gekennzeichnet, daß das Steuergerät weiterhin eine Indextabelle, in der die logischen Zylinderadressen physikalischen Zylindernummern und physikalischen Zylinder-Anfangsspeicherplätzen für physikalische Zylinder entsprechen, die willkürlich auf der zumindest einen Magnetplatte angeordnet sind, Einrichtungen zur Bezugnahme auf die Indextabelle in Abhängigkeit von der Anforderung für den Zugriff zur Gewinnung der physikalischen Zylindernummer und des physikalischen Zylinder-Anfangsspeicherplatzes und Einrichtungen zur mathematischen Übersetzung der logischen Kopfadresse und der logischen Sektoradresse umfaßt.

7. Plattenlaufwerk-System nach Anspruch 6,
dadurch gekennzeichnet, daß das Steuergerät weiterhin eine Fehlertabelle und Einrichtungen zur Bezugnahme auf die Fehlertabelle zur Erzeugung der physikalischen Kopfnummer und der physikalischen Sektornummer aus der logischen Kopfadresse und der logischen Sektoradresse umfaßt.

8. Plattenlaufwerk-System nach Anspruch 7,
dadurch gekennzeichnet, daß die Fehlertabelle eine Fehlerzählung enthält, die die Anzahl der physikalischen Fehler darstellt, die in jedem physikalischen Zylinder auf der zumindest einen magnetischen Speicherplatte vorhanden sind.

9. Plattenlaufwerk-System nach Anspruch 7 oder 8,
dadurch gekennzeichnet, daß die Indextabelle Zeiger auf die Fehlertabelle enthält, die den physikalischen Zylindernummern für physikalische Zylinder zugeordnet sind, in denen Fehler vorhanden sind.

## Revendications

1. Procédé pour accéder à un emplacement de mémoire physique sur un système d'entraînement de disque dur ayant au moins un disque de stockage magnétique (12) comportant une pluralité d'emplacements de mémoire physiques (40), et au moins une tête magnétique (14) pour accéder aux emplacements de mémoire physiques, dans lequel chaque emplacement de mémoire physique est désigné par un numéro de cylindre, un numéro de tête et un numéro de secteur, le procédé comprenant les étapes de réception d'une demande d'accès à un emplacement de mémoire physique, la demande comprenant une adresse de cylindre logique, une adresse de tête logique et une adresse de secteur logique, de conversion de l'adresse de cylindre logique, de l'adresse de tête logique et de l'adresse de secteur logique en un numéro de cylindre physique, un numéro de tête physique et un numéro de secteur physique, et de positionnement de la dite au moins une tête magnétique à l'emplacement de mémoire physique sur ledit au moins un disque désigné par le numéro de cylindre physique, le numéro de tête physique et le numéro de secteur physique, caractérisé en ce que l'étape de conversion comprend :
l'obtention du numéro de cylindre physique et de l'emplacement de début de cylindre physique par consultation d'une table d'index, dans laquelle les adresses de cylindres logiques correspondent à des numéros de cylindres physiques et des emplacements de début de cylindre physiques relatifs à des cylindres physiques situés de façon arbitraire sur ledit au moins un disque de stockage magnétique, et la conversion par procédé mathématique de l'adresse de tête logique et de l'adresse de secteur logique.

2. Procédé selon la revendication 1, caractérisé en ce que l'étape de conversion comprend en outre la consultation d'une table de défauts pour générer le numéro de tête physique et le numéro de secteur physique à partir de l'adresse de tête logique et de l'adresse de secteur logique, ceci pour contourner les défauts physiques présents sur ledit au moins un disque de stockage magnétique.

3. Procédé selon la revendication 2, caractérisé en ce que la table de défauts contient un compteur de défauts représentant le nombre de défauts physiques présents dans chaque cylindre physique sur ledit au moins un disque de stockage magnétique, et en ce que l'étape de génération comprend le calcul d'un numéro de tête physique initial et d'un numéro de secteur physique initial à partir de l'adresse de tête logique et de l'adresse de secteur logique, et le réglage du numéro de tête physique et du numéro de secteur physique en fonction du compteur de défauts obtenu à partir de la table de défauts.

4. Procédé selon la revendication 2 ou 3, caractérisé en ce que l'étape de consultation de la table de défauts est lancée par un pointeur dans la table d'index.

5. Procédé selon l'une quelconque des revendications précédentes, caractérisé en ce que le système a un contrôleur (18) et la demande provient d'un ordinateur central (20), le procédé comprenant en outre l'étape de stockage de la table d'index dans le contrôleur et de recherche de ladite tête magnétique aux numéros de cylindre, de tête et de secteur physiques pour faciliter le transfert d'informations entre le dit emplacement de mémoire physique et ledit ordinateur central.

6. Système d'entraînement de disque dur ayant un contrôleur (18), au moins un disque de stockage magnétique (12) ayant une pluralité d'emplacements de mémoire physiques (40), et au moins une tête magnétique (14) pour accéder aux emplacements de mémoire physiques, dans lequel chaque emplacement de mémoire physique est désigné par un numéro de cylindre, un numéro de tête et un numéro de secteur, le contrôleur comprenant des moyens pour recevoir une demande d'accès à un emplacement de mémoire physique sous forme d'une adresse de cylindre logique, d'une adresse de tête logique et d'une adresse de secteur logique, et des moyens pour convertir l'adresse de cylindre logique, l'adresse de tête logique et l'adresse de secteur logique en un numéro de cylindre physique, un numéro de tête physique et un numéro de secteur physique, et le contrôleur étant agencé de façon à déplacer ladite au moins une tête magnétique vers l'emplacement de mémoire physique sur ledit au moins un disque de stockage magnétique désigné par le numéro de cylindre physique, le numéro de tête physique et le numéro de secteur physique, caractérisé en ce que le contrôleur comprend en outre une table d'index dans laquelle les adresses de cylindres logiques correspondent à des numéros de cylindres physiques et des emplacements de début de cylindre physiques relatifs aux cylindres physiques situés de façon arbitraire sur ledit au moins un disque magnétique, des moyens pour consulter la table d'index en réponse à la demande d'accès pour obtenir le numéro de cylindre physique et l'emplacement de début de cylindre physique, et des moyens pour convertir mathématiquement l'adresse de tête logique et l'adresse de secteur logique.

7. Système d'entraînement de disque dur selon la revendication 6, caractérisé en ce que le contrôleur comprend en outre une table de défauts et des moyens pour consulter la table de défauts pour générer le numéro de tête physique et le numéro de secteur physique à partir de l'adresse de tête logique et de l'adresse de secteur logique.

8. Système d'entraînement de disque dur selon la revendication 7, caractérisé en ce que la table de défauts contient un compteur de défauts représentant le nombre de défauts physiques présents dans chaque cylindre physique sur ledit au moins un disque de stockage magnétique.

9. Système d'entraînement de disque dur selon la revendication 7 ou 8, caractérisé en ce que la table d'index contient des pointeurs faisant référence à la table de défauts et associés aux numéros de cylindres physiques relatifs aux cylindres physiques comportant des défauts.
